Europäisches Patentamt

European Patent Office

Office européen des brevets

(19)

(11) **EP 1 522 878 B1**

(12) **EUROPÄISCHE PATENTSCHRIFT**

(45) Veröffentlichungstag und Bekanntmachung des
Hinweises auf die Patenterteilung:
**09.08.2006  Patentblatt 2006/32**

(51) Int Cl.:
*G01V 5/00* (2006.01)

(21) Anmeldenummer: **04023811.5**

(22) Anmeldetag: **06.10.2004**

(54) **Verfahren zur Bestimmung der Lageänderung eines Gepäckstücks zur Untersuchung einer verdächtigen Region in diesem Gepäckstück**

Method for determining the displacement of luggage in order to scan a suspicious region in the luggage

Méthode pour déterminer le changement de position d'un colis pour scruter une région suspecte du colis

(84) Benannte Vertragsstaaten:
**AT BE BG CH CY CZ DE DK EE ES FI FR GB GR
HU IE IT LI LU MC NL PL PT RO SE SI SK TR**

(30) Priorität: **06.10.2003  DE 10346269**

(43) Veröffentlichungstag der Anmeldung:
**13.04.2005  Patentblatt 2005/15**

(73) Patentinhaber: **YXLON International Security
GmbH
22453 Hamburg (DE)**

(72) Erfinder:
• **Schmiegel, Armin, Dr.
22609 Hamburg (DE)**
• **Strecker, Helmut Dr.
22589 Hamburg (DE)**

(74) Vertreter: **Braitmayer, Sven-Erik
DTS Patentanwälte Rechtsanwälte
Sankt-Anna-Strasse 15
D-80538 München (DE)**

(56) Entgegenhaltungen:
WO-A-20/04072685         DE-A- 4 406 956
GB-A- 2 359 720          US-A- 5 367 552
US-A1- 2003 169 843

**Beschreibung**

Die Erfindung betrifft ein Verfahren zur Bestimmung der Lageänderung eines Gepäckstücks zur Untersuchung einer verdächtigen Region in diesem Gepäckstück.

Es ist heutzutage möglich, Gepäckstücke vollständig auf Sprengstoffe zu analysieren. Die zu Grunde liegenden Analyseverfahren erweisen sich dabei als sehr zuverlässig, aber auch als langwierig. Eine solche langwierige Analyse kann an Flughäfen nur in sogenannten Drittstufengeräten erfolgen. Dort fällt das Gepäckstückaufkommen deutlich geringer aus als bei den Erst- bzw. Zweitstufengeräten. Bei diesen Drittstufengeräten wird eine hohe Detektionsrate und eine niedrige Fehlalarmrate benötigt. Um ein solches Drittstufengerät auch als Zweitstufengerät verwenden zu können, muss die Analysezeit deutlich verringert werden.

Dieses Problem wurde bislang so gelöst, dass keine räumliche Trennung zwischen einem Erststufen- und einem Zweitstufengerät zugelassen wurde (siehe US 5,182,764) bzw. eine räumliche Verschiebung oder Drehung des Gepäckstücks verhindert wurde (siehe WO 03/065077 A2). Dies ist jedoch sehr aufwendig und in der Praxis kaum zu realisieren.

Aufgabe der Erfindung ist es deswegen, ein Verfahren zur Verfügung zu stellen, das auf der einen Seite eine hohe Detektionsrate bei gleichzeitig niedriger Fehlalarmrate aufweist, jedoch gegenüber den bekannten Verfahren mit den vorgenannten Rahmenbedingungen eine deutlich kürzere Prüfzeit hat.

Die Aufgabe wird durch ein Verfahren mit den Merkmalen des Patentanspruchs 1 gelöst. Bei dem erfindungsgemäßen Verfahren wird mittels eines Vergleichs von zwei Aufnahmen des selben Gepäckstücks, die in unterschiedlichen Untersuchungssystemen aufgenommen wurden, die relative Lageänderung des Gepäckstücks berechnet. Durch die Kenntnis der Koordinaten einer verdächtigen Region, die im ersten Untersuchungssystem gewonnen wurden, ist es im zweiten Untersuchungssystem möglich, nur diese verdächtige Region, deren Koordinaten aus dem ersten Untersuchungssystem nun auf die Koordinaten im zweiten Untersuchungssystem umgerechnet wurden, näher zu untersuchen. Dadurch spart man sich die Zeit, die gesamten schon als nicht verdächtige Region identifizierten Teile des Gepäckstücks noch einmal zu untersuchen. Als erstes und zweites Untersuchungssystem ist jedes bildgebende System möglich, soweit die Berechnung der Drehwinkel um die Vertikale und die Horizontale sowie die Translation erfolgen soll. Dazu zählen sowohl Videobilder als auch Durchleuchtungsbilder, beispielsweise mittels Röntgenstrahlung. Wie die verdächtige Region im ersten Untersuchungssystem erhalten wird, ist nicht erfindungswesentlich, so dass für das erste Untersuchungssystem und das zweite Untersuchungssystem Geräte verwendet werden können, die nach vollkommen unterschiedlichen technologischen Prinzipien arbeiten. Für das zweite Untersuchungssystem wird hinsichtlich der Untersuchung der verdächtigen Region ein Röntgendurchleuchtungssystem bevorzugt, jedoch ist die Erfindung keines Falls darauf beschränkt. Es ist genauso möglich, z. B. eine Kernspintomographie durchzuführen. Darüber hinaus können die beiden Untersuchungssysteme auch weit voneinander entfernt sein. Das zu untersuchende Gepäckstück kann von Hand getragen oder über ein Fahrzeug transportiert werden, so dass selbst ein Förderband zwischen ihnen entbehrlich ist. Im Ergebnis ergibt sich durch das erfindungsgemäße Verfahren eine enorme Einsparung hinsichtlich der Analysezeit bei gleichzeitiger hoher Detektionsrate sowie niedriger Fehlalarmrate.

Eine vorteilhafte Weiterbildung der Erfindung sieht vor, dass eine optische und/oder eine geometrische Vorverarbeitung des ersten und/oder zweiten Durchleuchtungsbildes vor der Bestimmung der Lageänderung erfolgt. Unter einer optischen Vorverarbeitung wird im Rahmen dieser Anmeldung verstanden, dass die Bildinformationen eines Durchleuchtungsbilds so manipuliert werden, dass die Funktion der Bildregistrierung bezüglich Genauigkeit und Zuverlässigkeit verbessert wird. Dies kann beispielsweise dadurch erfolgen, dass eine lokale Mittelung und Medianbildung zur Reduzierung des Rauschens vorgenommen wird. Darüber hinaus können auch nicht-lineare Skalenfilter (siehe G. Aubert & P. Kornprobst : Mathematical Problems in Image Processing: Partial Differential Equations and the Calculus of Variations. Springer, New York, 2002) verwendet werden. Diese Filter reduzieren den Bildinformationsgehalt innerhalb von Bildsegmenten, behalten jedoch Kanten bei, so dass die Lage der Bildsegmente sich nicht ändert. Dadurch können perspektivische Veränderungen aufgrund unterschiedlicher Sichtwinkel in den beiden Untersuchungssystemen kompensiert werden. Eine weitere Möglichkeit besteht darin, Look-up Table, Gamma-Filter oder Histogramm-Filter zu verwenden, wodurch gleiche Absorptionen innerhalb des Durchleuchtungsbildes auch gleich aussehen, was insbesondere bei unterschiedlichen Bau- oder Betriebsarten der beiden Untersuchungssysteme notwendig ist. Auch kann es sich um ein Hervorheben von lokalen Merkmalen, z. B. Kanten, Punkten oder massereichen Objekten, handeln. Schließlich wird unter geometrischer Vorverarbeitung im Rahmen dieser Anmeldung eine geometrische Entzerrung verstanden. Dies ist immer dann notwendig, wenn die beiden Untersuchungssysteme unterschiedliche Geometrien aufweisen. In einem solchen Fall kommt es auch bei gleicher Lage des untersuchten Gepäckstücks zu unterschiedlichen Darstellungen. Durch die optische Vorverarbeitung ist es möglich, dass eine bessere Grundlage für den Vergleich der Aufnahmen des Gepäckstücks des ersten und des zweiten Untersuchungssystems erfolgen kann. Dies führt zu einer einfacheren Bestimmung des ersten Drehwinkels um die Vertikale, des zweiten Drehwinkels um die Horizontale und der Translation.

Eine weitere vorteilhafte Weiterbildung der Erfindung sieht vor, dass eine Ausgabe einer Menge von ersten und/oder zweiten Drehwinkeln bei Mehrdeutigkeiten erfolgt. Dadurch ist es zwar nötig, mehrere verdächtige Regionen zu untersuchen, jedoch bleiben regelmäßig nur wenig Regionen übrig, so dass eine deutliche Reduktion der zu untersuchenden Regionen im Gepäckstück erfolgt. Gleichzeitig wird die Detektionsrate hoch gehalten und die Fehlalarmrate bleibt niedrig. Es wird mit den beiden Hypothesen gearbeitet, dass das Gepäckstück geflippt oder nicht geflippt wurde, d. h. dass es auf der selben Seite liegt oder auf seiner entgegengesetzten Seite. Mehrdeutigkeiten liegen vor, wenn das Verfahren nicht zwischen diesen beiden Hypothesen eindeutig entscheiden kann. Bevorzugt wird dabei eine Eingabe jeweils eines Wahrscheinlichkeitsmaßes oder eines Confidence-Maßes (eine Zahl beziehungsweise ein Vektor von Zahlen, die/der Auskunft über die Vertrauenswürdigkeit eines Ergebnisses liefert) für die ersten und/oder zweiten Drehwinkel. Dadurch wird eine Wertung der gefundenen verdächtigen Regionen vorgenommen und es kann eine Untersuchung der jeweiligen Region als erstes erfolgen, für die die Winkel mit dem höchsten Wahrscheinlichkeitsmaß gefunden wurden. Dadurch ist es wahrscheinlicher, dass ein gefährlicher Inhalt des Gepäckstücks schneller aufgefunden wird. Unter einem Wahrscheinlichkeitsmaß wird in der vorliegenden Anmeldung ein Wert verstanden, der eine Aussage darüber liefert, wie hoch die Zuverlässigkeit der ermittelten Werte für Translation und Drehwinkel (was auch die Angabe darüber enthält, ob das Gepäckstück geflippt wurde oder nicht) ist. Dieses Wahrscheinlichkeitsmaß kann dazu verwendet werden, andere Instanzen (sowohl einen Menschen als auch eine Maschine) über die Güte der Bildregistrierung entscheiden zu lassen. Beispielsweise wird ein Schwellwert verwendet, bei dessen Unterschreitung das gesamte Gepäckstück im zweiten Untersuchungssystem noch einmal gescannt werden muss.

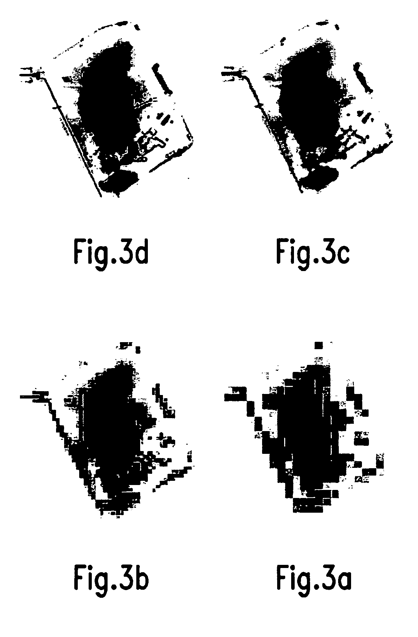

Eine weitere vorteilhafte Weiterbildung der Erfindung sieht vor, dass die Bestimmung der Lageänderung des Gepäckstücks anhand globaler Merkmale, insbesondere Korrelation, "mutual information" (siehe Beschreibung zu Figur 3) oder radialen Maßgrößen, erfolgt. Hierbei wird eine der beiden Aufnahmen des Gepäckstücks so lange gedreht, bis sie der anderen Aufnahme am ähnlichsten ist. Der Drehpunkt muss dabei in beiden Aufnahmen definiert sein. Bevorzugt nimmt man den Schwerpunkt des Bildes des Gepäckstücks. $I_{i,j}$ ist die Intensitätswert des Bildes am Punkt $(i,j)$. Die Koordinaten des Schwerpunktes des Bildes $(x_g, y_g)$ ergeben sich dann zu:

$$x_g = \frac{\sum_{i,j} x_i I_{i,j}}{\sum_{i,j} I_{i,j}} , \; y_g = \frac{\sum_{i,j} y_i I_{i,j}}{\sum_{i,j} I_{i,j}} .$$

Neben der Verwendung der Korrelation und der "mutual information" ist auch die Verwendung radialer Maßgrößen möglich. Hierbei wird die Aufnahme in N Winkelsegmente (die Auswertung erfolgt jeweils in einem Winkelbereich zwischen $\phi$ und $\phi + \Delta\phi$) aufgeteilt, die man mit unterschiedlichen Maßen, z. B. statistischen Momenten, bewertet. Dann vergleicht man die Werte des N. Segmentes mit den Werten des N+n. Segmentes, wobei n dem Winkelinkrement entspricht. Bevorzugt wird diese Bestimmung mit einer Skalenanalyse gekoppelt. Dabei vergleicht man die Ergebnisse auf unterschiedlichen Längenskalen, d.h. bei unterschiedlichen Auflösungen, und verbindet diese Erkenntnisse, wodurch eine verringerte Rechenzeit erhalten wird. So reduziert sich die Rechenzeit um den Faktor 4, wenn die Auflösung halbiert wird, da weniger Bildpunkte analysiert werden müssen. Bevorzugt können dabei auch verschiedene Vergleichsmaße verwendet und ihr Ergebnis gemeinsam berücksichtigt werden. Unter einem Vergleichsmaß wird im Rahmen der Anmeldung eine Funktion verstanden, die die beiden Aufnahmen als Eingabeparameter hat und eine Zahl oder einen Vektor liefert. Dieser Ausgabewert steht dann in Beziehung zum Unterschied zwischen den beiden Bildern. Das einfachste Beispiel hierfür ist die Differenz der Bildpunkte. Ist diese klein, dann sind die beiden Aufnahmen gleich. Unter globalen Merkmalen wird im Rahmen dieser Anmeldung verstanden, dass man alle Bildpunkte der Abbildung für die Bildregistrierung heranzieht. Dies steht im Unterschied zu den im Folgenden angegebenen lokalen Merkmalen, die als eine Untermenge dieser gesamten Bildpunkte verwendet werden. Die jeweilige Untermenge muss bestimmt werden. Eine Möglichkeit hierfür stellt die Detektion von Ecken und Kanten dar.

Eine weitere vorteilhafte Weiterbildung der Erfindung sieht vor, dass die Bestimmung der Lageänderung des Gepäckstücks anhand lokaler Merkmale erfolgt, insbesondere anhand "Random Sample Consensus" (RANSAC), robuster Schätzverfahren, Hough-Transformationen oder Least-Square-Verfahren. Hierbei sucht man sich geeignete lokale Merkmale in beiden Aufnahmen, z. B. Ecken, Kanten, Linien, signifikante Punkte oder kleine, leicht zu identifizierende Objekte (wie Metallknöpfe) innerhalb des Gepäckstücks. Diese Merkmale werden einander zugeordnet, indem man ermittelt, wo ein bestimmtes Merkmal der einen Aufnahme in der zweiten Aufnahme zu finden ist. Dadurch ist es möglich, die für die Transformation der Koordinaten der verdächtigen Region nötigen Informationen - nämlich den ersten Drehwinkel um die Vertikale, den zweiten Drehwinkel um die Horizontale und die Translation - zu bestimmen, durch die die Merkmale ineinander überführt werden können. Dieses Verfahren liefert genauere Ergebnisse, wenn die Abbildungsgeometrien der beiden bildgebenden Systeme bekannt sind. Die Frage, welches der bevorzugten Verfahren - RANSAC (siehe hierzu auch: "Random Sample Consensus: A Paradigm for Model Fitting with Applications to Image Analysis and Automated Cartogrophy" in Comm. of the ACM, Vol. 24, S. 381-395, 1981), robustes Schätzverfahren, Hough-Transformationen oder Least-Square-Verfahren - verwendet wird, hängt von der Rechengeschwindigkeit und der Güte der Zuordnung der Merkmale ab. Für die Zuordnung der Merkmale kann auf dieselben Maße, wie für die Verwendung globaler Bildinformationen zurückgegriffen werden.

Besonders bevorzugt wird die Bestimmung der Lageänderung des Gepäckstücks anhand einer Kopplung der Analyse mittels globaler Merkmale mit einer Analyse mittels lokaler Merkmale vorgenommen. Eine solche Kopplung kann beispielsweise dadurch erfolgen, dass man beide Bildregistrierungsmethoden verwendet und ein gewichtetes Mittel der beiden Ergebnisse bildet Dieses gewichtete Mittel kann dann als eine Funktion des Wahrscheinlichkeitsmaßes dienen. Eine andere Kopplung kann auch dadurch erfolgen, dass die lokalen Merkmale lediglich dann verwendet werden, wenn das Wahrscheinlichkeitsmaß der globalen Merkmale nicht hoch genug ist. Dadurch erhält man eine besonders zuverlässige und schnell zu erhaltende Information über die Transformation der Koordinaten.

Eine weitere vorteilhafte Weiterbildung der Erfindung sieht vor, dass die Bestimmung der Lageänderung anhand lokaler Merkmale auf verschiedenen Längenskalen erfolgt. Beispielsweise kann dies dadurch erfolgen, dass die Berechnung auf einer Längenskala durchgeführt wird und die Ergebnisse mit einer vergleichbaren Analyse auf einer anderen Längenskala verglichen werden. Bevorzugt wird die Wahl der lokalen Merkmale in Abhängigkeit der Längenskala erfolgen. Hierbei wählt man auf jeder Längenskala die Merkmale aus, die dort am Besten zu messen sind. Dies führt zu einer Vereinfachung der Bestimmung der Lageänderung des Gepäckstücks. Beispielsweise wird als Längenskala 1 das Originalbild der Aufnahme herangezogen. Längenskala 2 entspricht dann dem Originalbild mit geringerer Auflösung (siehe hierzu auch Skalenpyramide in Jähne, Digitale Bildverarbeitung, Springer 1997). Unter einer Skalenanalyse wird im Rahmen dieser Anmeldung verstanden, dass die Auflösung der Aufnahmen sukzessive erhöht wird. Es wird dann auf jeder Auflösungsstufe die Bildregistrierung durchgeführt. Zunächst beginnt die Bildregistrierung einer groben Auflösung, beispielsweise der Längenskala 4. Hieraus erhält man eine Lage mit einem Vertrauensintervall. Dann erhöht man die Auflösung, beispielsweise auf die Längenskala 3, und lässt die Bildregistrierung nur noch in dem Vertrauensintervall laufen. Diese Schritte werden bis zur maximalen Auflösung (Originalbild der Längenskala 1) durchgeführt. Der Vorteil besteht zum einen in der verkürzten Rechenzeit und zum anderen in der Robustheit dieses Verfahrens gegenüber geometrischen Verzerrungen, die insbesondere bei höheren Auflösungen zu Fehlregistrierungen führen können.

Eine weitere vorteilhafte Weiterbildung der Erfindung sieht vor, dass allein die lokalen Merkmale verwendet werden, die nicht in Widerspruch zur Analyse anhand der globalen Merkmale stehen. Dadurch wird die Zuordnung der lokalen Merkmale verbessert.

Weitere vorteilhafte Weiterbildungen der Erfindung sind Gegenstand der Unteransprüche.

Vorteilhafte Ausgestaltungen der Erfindung werden weiter anhand der Zeichnungen erläutert. Im Einzelnen zeigen:

Fig. 1         ein Blockdiagramm eines Verfahrens zum Vergleich der Aufnahmen eines Gepäckstücks und zur Bestimmung der Lageänderung des Gepäckstücks,

Fig. 2 a-c    Darstellungen der verschiedenen Schritte der Vorverarbeitung anhand eines Gepäckstücks,

Fig. 3 a-d    vier Stufen mit unterschiedlicher Größenskala zur Durchführung der Skalenanalyse,

Fig. 4         Diagramm einer Lagebestimmung mittels "mutual information",

Fig. 5         Diagramm einer Lagebestimmung mittels Skalenanalyse und Bildvergleich durch Korrelation,

Fig. 6 a-d    Beispiel einer Merkmalsextraktion mittels lokaler Merkmale anhand von zwei Darstellungen eines Gepäckstücks in unterschiedlicher Anordnung mit jeweiligen korrelierten Ausschnitten und

Fig. 7         Beispiel eines erfolgreichen Bildmatches aufgrund des erfindungsgemäßen Verfahrens mit einem Gepäckstück in zwei unterschiedlichen Lagen.

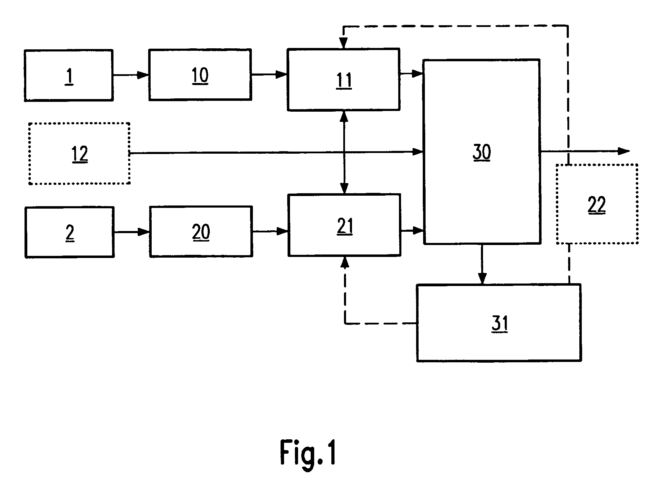

In Fig. 1 ist ein Blockdiagramm mit einer schematischen Darstellung eines Verfahrens zum Vergleich der Aufnahme eines Gepäckstücks 4 und zur Bestimmung der Lageänderung des Gepäckstücks 4 wiedergegeben. Für die beiden Untersuchungssysteme wird ein gemeinsames Koordinatensystem vereinbart. Als praktikabel hat sich hierbei ein Bezugssystem erwiesen, welches auf das Förderband abstellt. Es handelt sich um ein kartesisches Koordinatensystem, dessen X-Achse quer zur Förderrichtung verläuft und dessen Nullpunkt am Rand des Förderbandes liegt. Die Y-Koordinate weist entgegen der Förderrichtung und beginnt am Rand des Koffers. Die Z-Koordinate beginnt auf dem Förderband und zeigt in die Höhe. Damit ergibt sich ein rechtshändiges Koordinatensystem. Im dargestellten Ausführungsbeispiel wird nur ein einziger Drehwinkel angegeben, der sich auf eine Rotation des Gepäckstücks 4 um die Z-Achse bezieht. Der regelmäßig nötige zweite Drehwinkel wird durch die Angabe ersetzt, ob das Gepäckstück 4 geflippt wurde oder nicht. Unter "flippen" wird hierbei eine Drehung des Gepäcksstücks um 180˚ um die X-Achse verstanden. Um eine eindeutige Überführung vom ersten Untersuchungssystem in das zweite Untersuchungssystem vornehmen zu können, ist noch die Translation zu definieren. Hierbei handelt es sich um die Verschiebung des Gepäckstücks 4 auf dem Förderband in der X-Y-Ebene.

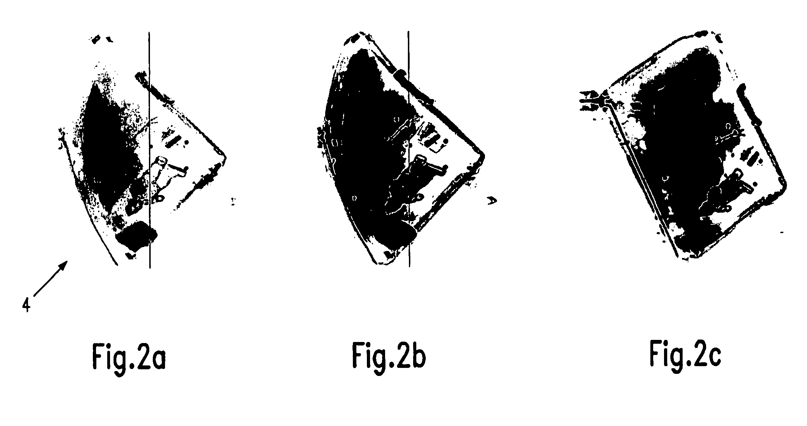

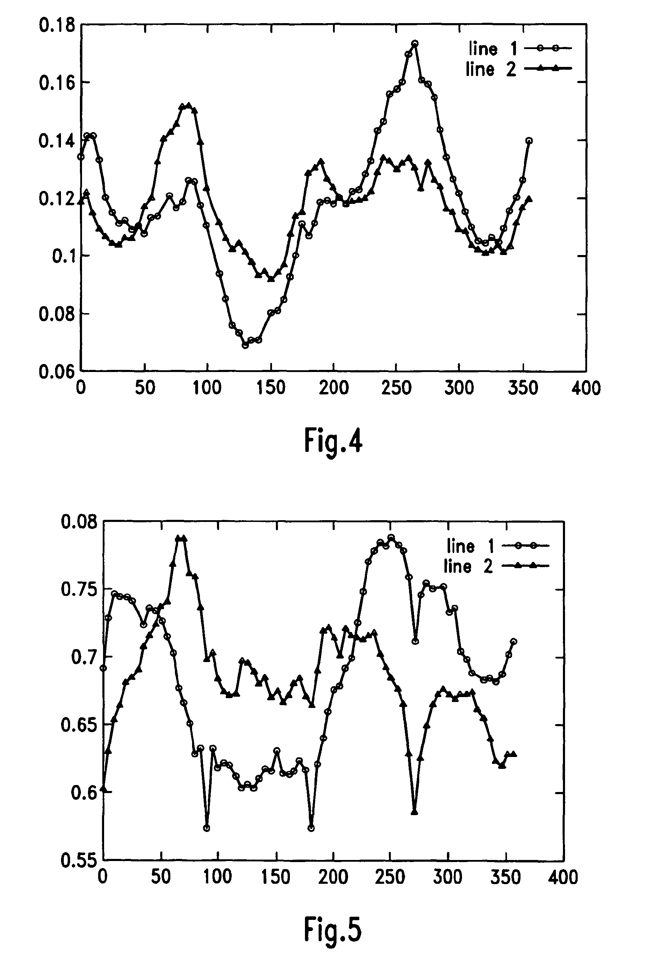

In einem Erststufengerät wird ein erstes Röntgendurchleuchtungsbild 1 aufgenommen. Das Gepäckstück 4 (siehe Fig. 2, 3, 6 und 7) befindet sich dabei in einer durch das erste Röntgendurchleuchtungsbild 1 festgehaltenen Lage. In einer zweiten Röntgendurchleuchtungsanlage wird ein zweites Röntgendurchleuchtungsbild 2 des selben Gepäckstücks 4 in einer zweiten Lage aufgenommen, die regelmäßig von der ersten Lage abweicht. Zunächst werden beide Röntgendurchleuchtungsbilder 1, 2 jeweils einer Vorverarbeitung 10, 20 unterzogen. Hierbei wird sowohl eine geometrische Entzerrung, als auch eine optische Vorverarbeitung der Intensitäten vorgenommen. Nähere Einzelheiten werden anhand der Fig. 2 a-c unten erläutert. Danach folgt eine Messung unterschiedlicher Merkmale des jeweiligen Bildinhalts um eine Merkmalsextraktion 11, 21 vornehmen zu können. Dabei wird auch eine Bestimmung vergleichender Merkmale vorgenommen. Nähere Einzelheiten zur Merkmalsextraktion 11, 21 und der daraus resultierenden Lagebestimmung durch die Ermittlung der Lageänderung der vergleichenden Merkmale, werden unten bezüglich der Fig. 3 a-d, 4, 5 und 6 a-d ausgeführt (wobei die Fig. 4, 5 und 6 a-d mit willkürlichen Abszissen- und Ordinatenwerten versehen sind). Die extrahierten Merkmale werden bewertet. Mit Hilfe der geeigneten Merkmale erfolgt eine Berechnung 30 der Lageänderung. Besonders gut arbeitet das erfindungsgemäße Verfahren, wenn es die Möglichkeit hat, eine gemachte Winkelschätzung zu bewerten und einen oder mehrere Drehwinkel zuzüglich eines Winkelmaßes auszugeben. Dadurch wird vermieden, dass in der darauffolgenden Analyse Fehler aufgrund einer falschen Winkelbestimmung mitgeschleppt werden. Es erfolgt dann noch eine geometrische Transformation 31 der Bilder. Neben dem Bild der ersten Stufe des Erststufengeräts, wird noch eine erste Liste 12 von Koordinaten der ersten verdächtigen Regionen 13 mitgeliefert. Nach der erfolgreichen Bestimmung der Lage über die Berechnung 30 der Lageänderung wird eine zweite Liste 22 mit transformierten zweiten verdächtigen Regionen 23 errechnet und ausgegeben, die sich dann auf das zweite Röntgendurchleuchtungsbild 2 beziehen.

In Fig. 2 sind drei Phasen hinsichtlich der Vorverarbeitung 10 eines ersten Röntgendurchleuchtungsbildes 1, stellvertretend auch für das zweite Röntgendurchleuchtungsbild 2, dargestellt. Die Art der Vorverarbeitung 10, 20 hängt von den verwendeten Durchleuchtungsgeräten und ihrer Abbildungsgeometrie ab. In dem hier aufgeführten Beispiel handelt es sich um einen Detektor mit L-förmiger Geometrie. In Fig. 2 a ist das ursprünglich aufgenommene Röntgendurchleuchtungsbild 1, 2 dargestellt. In einem ersten Vorverarbeitungsschritt erfolgt eine optische Kalibrierung, bei der die volle Dynamik der Intensitätswerte verwendet wird, eine sogenannte Histogramm-Angleichung (Fig. 2b).

In Fig. 2 c ist das Ergebnis der Darstellung des Gepäckstücks 4 nach der Durchführung eines zweiten Schrittes zu sehen. Dabei wurde das verzerrte Bild entzerrt. Dies ist problemlos möglich, wenn die Geometrie der Röntgendurchleuchtungsanlage, insbesondere die Anordnung der Röntgenröhre zum Detektor sowie der relativen Lage des Objektes zu beiden und die Geometrie des Detektors bekannt sind.

Die beiden vorgenannten Schritte dienen gemeinschaftlich dazu, Bilder von unterschiedlichen Durchleuchtungsgeräten auf eine gemeinsame, vergleichbare Basis zu stellen.

In den Fig. 3 a-d sind die vier untersten Stufen einer Skalenpyramide dargestellt. Diese werden bei der Merkmalsextraktion 11, 21 herangezogen. Dabei nimmt die Auflösung von Fig. 3 a zu Fig. 3 d sukzessive zu. Neben der Verwendung von vier Stufen der Skalenpyramide ist auch eine beliebige andere Anzahl von Stufen möglich.

Als Beispiel für die Merkmalsextraktion wird hier zum einen die Verwendung einer Skalenanalyse und zum anderen ein Bildvergleich mittels Korrelation und "mutual information" beschrieben. Im Anschluss an die Vorverarbeitung 10, 20 der Röntgendurchstrahlungsbilder 1, 2 werden diese der Skalenanalyse unterzogen. Dies bedeutet, dass hier auf unterschiedlichen räumlichen Auflösungen beziehungsweise Längenskalen die Korrelation

$$C(I_1(r, \phi), I_2(r, \phi + \Delta\phi)) = \sum_{r,\phi}(I_1(r, \phi) - \bar{I}_1(r, \phi))(I_2(r, \phi) - \bar{I}_2(r, \phi))$$

berechnet wird. Dabei entsprechen $I_1$ und $I_2$ den Projektionen der Röntgenbilder auf das Förderband. Der Einfachheit halber wurde eine Transformation der kartesischen Koordinaten in Polarkoordinaten durchgeführt. Eine Projektion auf andere Ebenen ist genauso möglich. Das Bild auf der gröbsten Längenskala (siehe Fig. 3 a) besteht nur noch aus ca. 40x40-Bildpunkten. Auf diesen Bildern spielen die Topologieänderungen, die bei gedrehten Objekten in Röntgenbildern stets auftreten, eine abgeschwächte Rolle. Die weitere Analyse erfolgt zunächst nur anhand der gröbsten Längenskala. Sie wird dann sukzessive auch auf feinere Längenskalen mit höherer Auflösung ausgedehnt. Auf der untersten Ebene des ersten Röntgendurchleuchtungsbildes 1, das regelmäßig als Erststufenbild bezeichnet wird, wird dieses mit einem Prescannerbild des zweiten Röntgendurchstrahlungsbildes 2 mittels eines Korrelationsverfahrens für verschiedene Drehwinkel verglichen. Dies wird auch mit einem um 180˚ geflippten Koffer durchgeführt. Als Korrelationsmaß zwischen den normierten Röntgendurchleuchtungsbildern 1, 2 wird im vorliegenden Beispiel das oben genannte Maß $C(I_1(r, \phi), I_2(r, \phi + \Delta\phi))$ verwendet. $\overline{I}_{1,2}$ sind die mittleren Intensitäten des Bildes. $I_{1,2}(r,\phi)$ der Intensitätswert bei $r$ und $\phi$. Alternativ kann auch die "mutual information" herangezogen werden. In diesem Fall werden die drei Wahrscheinlichkeitsdichten $p(a)$, $p(b)$ und $p(a,b)$ berechnet. $p(a)$ und $p(b)$ sind die Wahrscheinlichkeitsdichten bestimmter Amplitudenwerte. $p(a,b)$ die Wahrscheinlichkeitsdichte dafür, dass ein Pixel gleichzeitig einen Wert a und einen Wert b besitzt. Verglichen wird die "mutual information" dieser drei Wahrscheinlichkeitsdichten. Sie ergibt sich zu:

$$I = H(p(a)) + H(p(b)) - H(p(a,b))$$

Dabei steht H für die Entropie. Diese definiert sich aus:

$$H(p(x_1,...,x_n)) = \int_{-\infty}^{\infty} dx_1 ... \int_{-\infty}^{\infty} dx_n \, p(x_1,...,x_n) \log(p(x_1,...,x_n)).$$

Die Berechnung der Korrelation bzw. der "mutual information" entspricht dem Schritt der Merkmalsextraktion 11, 21 sowie in Teilen der Berechnung der Lageänderung 30. Bei einer Lagebestimmung mit Hilfe globaler Merkmale wird zusätzlich das Bild auf der untersten Größenskala um seinen Schwerpunkt gedreht.

In Fig. 4 ist der Verlauf der Maße für verschiedene Drehwinkel dargestellt. Dabei wurde das Bild mit der gröbsten Längenskala des zweiten Röntgendurchleuchtungsbildes 2 um seinen Schwerpunkt gedreht und mit dem Bild des Erststufengeräts, also dem ersten Röntgendurchleuchtungsbild 1 bezüglich seines Schwerpunktes verglichen. Die Maßanalyse auf der gröbsten Längenskala liefert verschiedene Maximalpunkte. Diese werden im nächsten Schritt dazu verwendet, um auf den höheren Ebenen die Maße genauer zu bestimmen. Dies bedeutet, dass anstelle alle Drehwinkel auf jeder Ebene durchzustimmen, nur die besten Kandidaten auf der nächsthöheren Ebene verwendet werden.

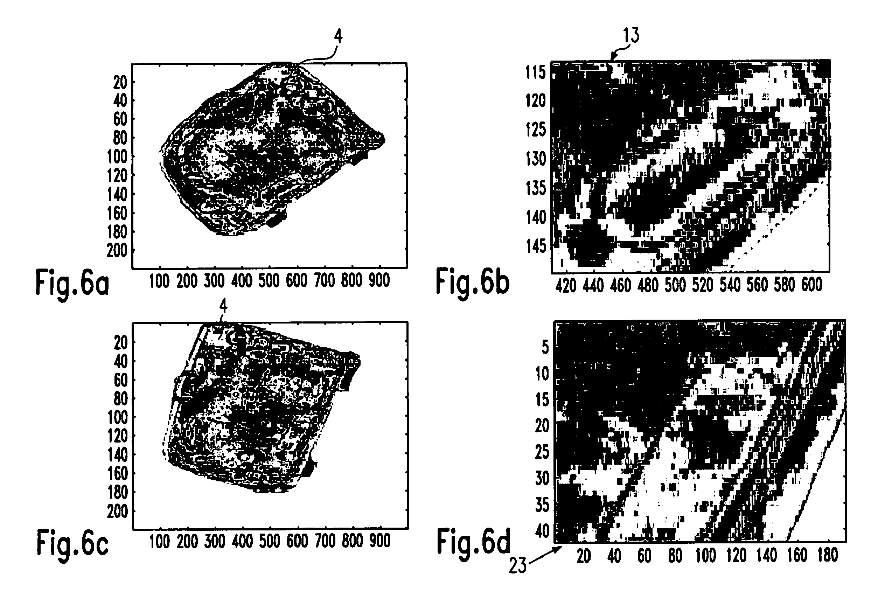

Am Ende dieser Analyse, die auf allen Ebenen der Skalenpyramide durchgeführt wurde, werden die Korrelationsergebnisse analysiert und der Drehwinkel des Gepäckstücks 4 bestimmt. Dabei können und werden auch noch andere Informationen mitberücksichtigt. Mit Hilfe der Momentenanalyse des Bildes wurden die Drehwinkel der beiden Röntgendurchleuchtungsbilder 1, 2 errechnet und mit dem Ergebnis des oben beschriebenen Verfahrens verglichen. Darüber hinaus wurden die Maxima der verschiedenen Maße des geflippten bzw. des ungeflippten Gepäckstücks 4 miteinander verglichen und ausgewertet. Für den Fall, dass die Analyse keinen eindeutigen Winkel bestimmen kann, werden dann gegebenenfalls weitere Winkel ausgegeben. Eine weitere Verfeinerung ist unter Verwendung lokaler Merkmale möglich (siehe unten zu Fig. 6 a-d).

Da nun die Lageänderung des Gepäckstücks 4 bekannt ist, lässt sich die neue Position der verdächtigen Region abschätzen. In dieser Region kann nun ein abschließender Scan durchgeführt werden. Die in Fig. 4 dargestellten Linien gehören zum einen zu einem nicht gekippten Koffer (line 1) und im anderen Fall zu einem gekippten Koffer (line 2).

In Fig. 5 ist anstatt der "mutual information" der Fig. 4 die Korrelation für unterschiedliche Winkelmaße des ersten Röntgendurchleuchtungsbildes 1 mit dem zweiten Röntgendurchleuchtungsbild 2 auf der gröbsten Längenskala angegeben. Auch hier sind zwei Linien dargestellt, wobei die eine Linie (line 1) zu einem nicht geflippten Koffer und die zweite Linie (line 2) zu einem geflippten Koffer gehört.

In den Fig. 6 a-d ist das Verfahren der Merkmalsextraktion 11, 21 mit Hilfe lokaler Merkmale dargestellt. In den Fig. 6 a und 6 c ist dasselbe Gepäckstück 4 in unterschiedlichen Lagen dargestellt. In Fig. 6 b ist ein erster Bildausschnitt 13 aus Fig. 6 a dargestellt, in dem eine Flasche zu erkennen ist. Die selbe Flasche ist in Fig. 6 d nach Durchführung des erfindungsgemäßen Verfahrens aufgefunden worden.

Die Lagebestimmung mittels lokaler Merkmale kann für sich allein oder als Nachbearbeitungsschritt zu einer Lagebestimmung mit Hilfe der globalen Merkmale (wie oben zu den Fig. 3 a-d ausgeführt) durchgeführt werden. Die Vorverarbeitung 10, 20 wurde hierfür vorher durchgeführt. Unter Umständen sind noch weitere Schritte notwendig, je nach dem, wie die lokalen Merkmale definiert werden. Zunächst werden aus dem ersten Röntgendurchleuchtungsbild 1 verschiedene erste Bildausschnitte 13 mit lokalen Features ermittelt. Dies kann beispielsweise durch Bestimmung von Kanten, Ecken oder Bereichen hoher Intensität erreicht werden. Darüber hinaus kann auch eine Bestimmung der Entropie der lokalen Amplitudenstatistik erfolgen. Die Amplitudenstatistik beschreibt die Wahrscheinlichkeitsdichte innerhalb des ersten Bildausschnitts 13 $x \in [x_0, x_0 + L_x]$, $y \in [y_0, y_0 + L_y]$ einen bestimmten Amplitudenwert $\tilde{I}$ zu erhalten.

Sie errechnet sich aus:

$$p_{x_0,y_0}(\tilde{I}) = \sum_{x=x_0}^{L_x} \sum_{y=y_0}^{L_y} \delta(I(x,y) - \tilde{I}).$$

$L_x$, $L_y$ beschreiben dabei die Größe des ersten Bildausschnitts 13 und $x_0$, $y_0$ die Position des ersten Bildausschnitts 13 im Bild. $\delta$ stellt eine Delta-Funktion dar. Diese ergibt eins, wenn die Intensität des ersten Bildausschnittes 13 dem Wert $\tilde{I}$ entspricht.

Kennzeichnend für die Amplitudenstatistik ist, dass sie keine räumlichen Informationen enthält. Sie ist daher unabhängig von der relativen Lage einzelner Objekte des ersten Bildausschnitts 13.

Analog wird im zweiten Röntgendurchleuchtungsbild 2 nach denselben oder sinnvoll erweiterten Regeln ebenfalls nach lokalen Merkmalen gesucht, was der in Fig. 1 dargestellten zweiten Merkmalsextraktion 21 entspricht. Für beide Röntgendurchleuchtungsbilder 1, 2 existiert eine Menge von Merkmalen mit ihren Koordinaten $\{X_{1,2}(x,y)\}$. Im nächsten Schritt wird versucht, die verschiedenen Merkmale einander zuzuordnen. Alternativ kann auf die Suche nach Merkmale in einem Bild verzichtet werden. Dann werden die Merkmale des anderen Röntgendurchleuchtungsbildes 1, 2 im kompletten Bild gesucht.

Exemplarisch werden im Folgenden die Merkmale über ihre Amplitudenstatistiken beschrieben. Es wird dabei angenommen, dass die beiden Bildausschnitte 13, 23 der Fig. 6 b und 6 d, die sich am ähnlichsten sind, das gesuchte Merkmal enthalten. In dem hier vorgestellten Verfahren wurde als Ähnlichkeitsmaß die Differenz bezüglich der verschiedenen Momente der Amplitudenstatistik sowie die Entropie verwendet. Andere Ähnlichkeitsmaße sind beispielsweise der Wert des Faltungsintegrals der Wahrscheinlichkeitsdichten.

Aus dem ersten Röntgendurchleuchtungsbild 1 des Gepäckstücks 4 (Fig. 6 a) wurde ein erster Bildausschnitt 13 (Fig. 6 b) ausgewählt. Danach wurde im zweiten Röntgendurchleuchtungsbild 2 (Fig. 6 c) ein zweiter Bildausschnitt 23 mit den gleichen Abmaßen gesucht, der dem ersten Bildausschnitt 13 in seinen statistischen Eigenschaften ähnelt. Da es sich bei dem zweiten Bildausschnitt 23 der Fig. 6 b um ein Rechteck handelt, die Lage des Gepäckstücks 4 sich allerdings zwischen der Fig. 6 a und der Fig. 6 c durch eine Drehung geändert hat, ist in Fig. 6 d die Flasche nicht vollständig abgebildet. Dieses Problem ließe sich beispielsweise dadurch umgehen, dass keine rechteckigen Bildausschnitte 13, 23 verwendet werden, sondern kreisrunde.

Im Ergebnis konnte ein Teil der verschiedenen Merkmale einander zugeordnet werden. Die Paare beschreiben somit zwei Sichten des selben Merkmales. Geht man davon aus, dass lediglich das Gepäckstück 4, jedoch nicht sein Inhalt, seine Lage verändert hat, ist es möglich, die Berechnung der Lageänderung 30 des Gepäckstücks 4 anhand der neuen Koordinaten vorzunehmen.

Für jedes Merkmal $x_i$ gilt, dass es die geltende Abbildungsgleichung (siehe auch Richard Hartley and Andrew Zisserman in "Multiple View Geometry in Computer Vision"; Second Edition; Cambridge University Press, March 2004) erfüllt, diese lautet:

$$0 = x_i'^T F\, x_i.$$

F stellt dabei die fundamentale Matrix des bildgebenden Systems dar, $x'$ den abgebildeten Punkt und $x$ die Koordinaten des realen Punktes. Das Merkmalspaar steht somit im folgenden Bezug zueinander:

$$0 = x_i'^T F_1 x_i$$

$$0 = x_i''^T F_2 T_{\varphi,\phi,x,y} x_i$$

$T_{\varphi,\phi,x,y}$ beschreibt die Lageänderung des Merkmals (Translationen und Drehungen); x" steht für die Bildkoordinaten im zweiten Röntgendurchleuchtungsbild 2.

Für die Lösung dieses mathematischen Problems existieren eine Reihe verschiedener Techniken. Ist gewährleistet, dass die Zuordnungen der Merkmale hinreichend gut ist, kann mit Hilfe eines Least-Square-Verfahrens versucht werden, die gesuchten Drehwinkel und Translationen zu bestimmen. Andernfalls kann auf sogenannte robuste Schätzverfahren zurückgegriffen werden.

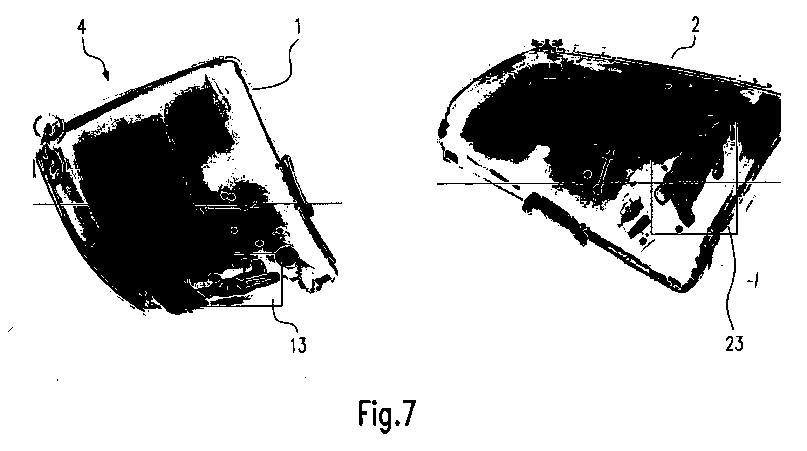

Das Prinzip der Erfindung, das anhand der Fig. 1 bis 6 ausführlich oben beschrieben wurde, kann anhand Fig. 7 wie folgt zusammengefasst werden:

Ein erstes Röntgendurchleuchtungsbild 1 eines Gepäckstücks 4 aus einem Erststufengerät (linke Seite) ist einem zweiten Röntgendurchleuchtungsbild 2 desselben Gepäckstücks 4 eines weiteren Röntgendurchleuchtungsapparats gegenübergestellt. Das Gepäckstück 4 ist hierbei sowohl gedreht als auch geflippt worden. Aufgrund des durchgeführten erfindungsgemäßen Verfahrens ist eine Zuordnung der ersten verdächtigen Region 13 (die zur Verdeutlichung als Rechteck eingezeichnet ist) zu der zweiten verdächtige Region 23 sehr gut möglich.

Zur starken Verringerung der Analysezeit wird in einem Zweitstufengerät lediglich noch eine Analyse der zweiten verdächtigen Region 23 durchgeführt, die in einem ersten Röntgendurchleuchtungsbild 1 in einem Erststufengerät als verdächtig eingestuft wurde. Die Koordinaten der von dem Erststufengerät ermittelten ersten verdächtigen Region 13, sowie ein Linescanbild werden dem Zweitstufengerät übermittelt. Da beide Geräte räumlich voneinander getrennt sind und das Gepäckstück 4 somit regelmäßig über verschiedene Transportsysteme vom Erststufengerät zum Zweitstufengerät gebracht wird, müssen die Koordinaten der neuen Lage des Gepäckstücks 4 angepasst werden. Hierzu ist auch das Zweitstufengerät mit einem Linescanner ausgestattet. Nach dem Scannen des zweiten Röntgendurchleuchtungsbilds 2 werden die beiden Röntgendurchleuchtungsbilder 1, 2 jeweils einer Vorverarbeitung 10, 20 mittels einer Kalibrierung unterzogen, so dass sie miteinander vergleichbar sind. Daran schließt sich jeweils eine Merkmalsextraktion 11, 21 mittels globaler und/oder lokaler Merkmale für jedes der beiden Röntgendurchleuchtungsbilder 1, 2 an. Aufgrund der aus den beiden Merkmalsextraktionen 11, 21 gewonnenen Merkmale kann mittels eines Vergleichs die Lageänderung des Objekts 4 berechnet werden. Dadurch ist es möglich, dass in dem Zweitstufengerät nur noch die zweite verdächtigen Region 23 analysiert wird und nicht mehr das gesamte Objekt 4. Das erfindungsgemäße Verfahren bewirkt somit eine hochgradige Zeitersparnis bei der Analyse des Objekts 4 ohne dass die Detektionsrate abfällt oder die Fehlalarmrate ansteigt.

BEZUGSZEICHENLISTE

| 1 | Erstes Röntgendurchleuchtungsbild |
| 2 | Zweites Röntgendurchleuchtungsbild |
| 4 | Gepäckstück |
| 10 | Vorverarbeitung des ersten Röntgendurchleuchtungsbilds |
| 11 | Erste Merkmalsextraktion |
| 12 | Erste Liste der verdächtigen Regionen |
| 13 | Erster Bildausschnitt bzw. erste verdächtige Region |
| 20 | Vorverarbeitung des zweiten Röntgendurchleuchtungsbilds |
| 21 | Zweite Merkmalsextraktion |
| 22 | Zweite Liste der verdächtigen Regionen |
| 23 | Zweiter Bildausschnitt bzw. zweite verdächtige Region |
| 30 | Berechnung der Lageänderung |
| 31 | Geometrische Transformation |

**Patentansprüche**

1.  Verfahren zur Bestimmung der Lageänderung eines Gepäckstücks (4) zur Untersuchung einer verdächtigen Region (13, 23) in diesem Gepäckstück (4) mit folgenden Schritten:

    - Aufnehmen einer ersten Aufnahme des Gepäckstücks (4) mittels eines ersten Untersuchungssystems;
    - Befördern des Gepäckstücks (4) vom ersten Untersuchungssystem zu einem zweiten Untersuchungssystem, das vom ersten Untersuchungssystem räumlich getrennt ist;
    - Übergabe der ersten Aufnahme des Gepäckstücks (4) und von Koordinaten einer ersten verdächtigen Region (13) im Gepäckstück vom ersten Untersuchungssystem an das zweite Untersuchungssystem;
    - Aufnehmen einer zweiten Aufnahme des Gepäckstücks (4) mittels des zweiten Untersuchungssystems;
    - Vergleich der beiden Aufnahmen des Gepäckstücks (4) des ersten und des zweiten Untersuchungssystems;
    - Bestimmung der Lageänderung des Gepäckstücks (4) mit Angabe eines ersten Drehwinkels um die Vertikale, eines zweiten Drehwinkels um die Horizontale und einer Translation;
- Bestimmung der Koordinaten der zweiten verdächtigen Region (23), die der ersten verdächtigen Region (13) im ersten Untersuchungssystem entspricht, im zweiten Untersuchungssystem;
- gezielte Untersuchung des Gepäckstücks (4) nur im Bereich der Koordinaten der zweiten verdächtigen Region (23) im zweiten Untersuchungssystem.

2. Verfahren nach Anspruch 1, **dadurch gekennzeichnet, dass** im ersten Untersuchungssystem eine Aufnahme eines ersten Durchleuchtungsbildes (1) und die Bestimmung einer ersten verdächtigen Region (13) im Gepäckstück (4) mittels eines ersten Durchleuchtungsgeräts erfolgt.

3. Verfahren nach Anspruch 2, **dadurch gekennzeichnet, dass** eine optische und/oder eine geometrische Vorverarbeitung des ersten und/oder zweiten Durchleuchtungsbildes (1, 2) vor der Bestimmung der Lageänderung erfolgt.

4. Verfahren nach einem der vorstehenden Ansprüche, **dadurch gekennzeichnet, dass** eine Ausgabe einer Menge von ersten und/oder zweiten Drehwinkeln bei Mehrdeutigkeiten erfolgt.

5. Verfahren nach Anspruch 4, **dadurch gekennzeichnet, dass** eine Angabe jeweils eines Wahrscheinlichkeitsmaßes für die ersten und/oder zweiten Drehwinkel erfolgt.

6. Verfahren nach einem der vorstehenden Ansprüche, **dadurch gekennzeichnet, dass** die Bestimmung der Lageänderung des Gepäckstücks (4) anhand globaler Merkmale, insbesondere Korrelation, "mutual information" oder radialen Maßgrößen, erfolgt.

7. Verfahren nach Anspruch 6, **dadurch gekennzeichnet, dass** es mit einer Skalenanalyse gekoppelt wird.

8. Verfahren nach Anspruch 6 oder 7, **dadurch gekennzeichnet, dass** verschiedene Vergleichsmaße verwendet werden.

9. Verfahren nach einem der vorstehenden Ansprüche, **dadurch gekennzeichnet, dass** die Bestimmung der Lageänderung des Gepäckstücks (4) anhand lokaler Merkmale erfolgt, insbesondere anhand RANSAC, robuster Schätzverfahren, Hough-Transformationen oder Least-Square-Verfahren.

10. Verfahren nach Anspruch 9, **dadurch gekennzeichnet, dass** eine Kopplung mit einer Skalenanalyse erfolgt.

11. Verfahren nach Anspruch 9 oder 10, **dadurch gekennzeichnet, dass** die Bestimmung der Lageänderung anhand lokaler Merkmale auf verschiedenen Längenskalen erfolgt.

12. Verfahren nach Anspruch 11, **dadurch gekennzeichnet, dass** die Wahl der lokalen Merkmale in Abhängigkeit der Längenskala erfolgt.

13. Verfahren nach einem der vorstehenden Ansprüche, **dadurch gekennzeichnet, dass** ein Vergleich der Ergebnisse der Analyse anhand der globalen Merkmale mit den Ergebnissen der Analyse anhand der lokalen Merkmale erfolgt.

14. Verfahren nach einem der vorstehenden Ansprüche, **dadurch gekennzeichnet, dass** allein die lokalen Merkmale verwendet werden, die nicht in Widerspruch zur Analyse anhand der globalen Merkmale stehen.

**Claims**

1. Method for determining the change in position of an item of luggage (4) in order to examine a suspect region (13, 23) in this item of luggage (4) with the following steps:

- Taking a first picture of the item of luggage (4) by means of a first examination system;
- Conveying the item of luggage (4) from the first examination system to a second examination system which is physically separated from the first examination system;
- Transferring the first picture of the item of luggage (4) and of coordinates of a first suspect region (13) in the item of luggage from the first examination system to the second examination system;
- Taking a second picture of the item of luggage (4) by means of the second examination system;

- Comparing the two pictures of the item of luggage (4) of the first and second examination systems;
- Determining the change in position of the item of luggage (4) giving a first angle of rotation about the vertical axis, a second angle of rotation about the horizontal axis and a translation;
- Determining the coordinates of the second suspect region (23), which corresponds to the first suspect region (13) in the first examination system, in the second examination system;
- Targeted examination of the item of luggage (4) only in the area of the coordinates of the second suspect region (23) in the second examination system.

2. Method according to claim 1, **characterized in that** in the first examination system a picture of a first fluoroscopic image (1) is taken and a first suspect region (13) in the item of luggage (4) is determined by means of a first fluoroscopy apparatus.

3. Method according to claim 2, **characterized in that** an optical and/or geometrical preprocessing of the first and/or second fluoroscopic image (1, 2) takes place before the determination of the change in position.

4. Method according to one of the previous claims, **characterized in that** a set of first and/or second angles of rotation are issued in the case of ambiguities.

5. Method according to claim 4, **characterized in that** a probability value is given in each case for the first and/or second angles of rotation.

6. Method according to one of the previous claims, **characterized in that** the change in position of the item of luggage (4) is determined using global features, in particular correlation, mutual information or radial dimensional variables.

7. Method according to claim 6, **characterized in that** it is coupled with a scale analysis.

8. Method according to claim 6 or 7, **characterized in that** different comparison values are used.

9. Method according to one of the previous claims, **characterized in that** the change in position of the item of luggage (4) is determined using local features, in particular using RANSAC, robust estimation methods, Hough transformations or least-square methods.

10. Method according to claim 9, **characterized in that** a coupling with a scale analysis is carried out.

11. Method according to claim 9 or 10, **characterized in that** the determination of the change in position using local features takes place on different linear scales.

12. Method according to claim 11, **characterized in that** the local features are chosen according to the linear scale.

13. Method according to one of the previous claims, **characterized in that** a comparison of the results of the analysis using the global features with the results of the analysis using the local features takes place.

14. Method according to one of the previous claims, **characterized in that** only the local features are used which do not contradict the analysis using the global features.

**Revendications**

1. Méthode pour déterminer le changement de position d'un colis (4) pour scruter une région suspecte (13, 23) de ce colis (4) présentant les étapes suivantes :

- prise d'un premier cliché du colis (4) au moyen d'un premier système d'inspection ;
- envoi du colis (4) du premier système d'inspection à un deuxième système d'inspection séparé dans l'espace du premier système d'inspection ;
- transfert du premier cliché du colis (4) et des coordonnées d'une première région suspecte (13) du colis du premier système d'inspection au deuxième système d'inspection ;
- prise d'un deuxième cliché du colis (4) au moyen du deuxième système d'inspection ;
- comparaison des deux clichés du colis (4) provenant du premier et du deuxième système d'inspection ;

- détermination du changement de position du colis (4) avec indication d'un premier angle de rotation autour de la verticale, d'un deuxième angle de rotation autour de l'horizontale et d'une translation ;
- détermination dans le deuxième système d'inspection des coordonnées de la deuxième région suspecte (23) correspondant à la première région suspecte (13) du premier système d'inspection ;
- inspection sélective du colis (4) uniquement dans la zone des coordonnées de la deuxième région suspecte (23) du deuxième système d'inspection.

2. Méthode selon la revendication 1, **caractérisé en ce qu'**on réalise dans le premier système d'inspection un cliché d'une première image radiographique (1) et la détermination d'une première région suspecte (13) du colis (4) au moyen d'un premier appareil radiographique.

3. Méthode selon la revendication 2, **caractérisé en ce qu'**un prétraitement optique et/ou géométrique de la première et/ou de la deuxième image radiographique (1, 2) est réalisé avant de déterminer le changement de position.

4. Méthode selon l'une quelconque des revendications précédentes, **caractérisé en ce qu'**une quantité de premiers et/ou deuxièmes angles de rotation sont fournis en cas d'ambiguïté.

5. Méthode selon la revendication 4, **caractérisé en ce qu'**une indication est fournie sur la mesure de vraisemblance du premier et/ou du deuxième angle de rotation.

6. Méthode selon l'une quelconque des revendications précédentes, **caractérisé en ce que** la détermination du changement de position du colis (4) se fait à l'aide des caractéristiques globales, en particulier de la corrélation, de la transinformation (mutual information) ou des grandeurs radiales.

7. Méthode selon la revendication 6, **caractérisé en ce qu'**il est couplé à une analyse d'échelle.

8. Méthode selon la revendication 6 ou 7, **caractérisé en ce qu'**on utilise plusieurs mesures de comparaison.

9. Méthode selon l'une quelconque des revendications précédentes, **caractérisé en ce que** la détermination du changement de position du colis (4) se fait à l'aide des caractéristiques locales, en particulier de l'algorithme de RANSAC, de la méthode robuste d'estimation, des transformations de Hough ou de la méthode des moindres carrés.

10. Méthode selon la revendication 9, **caractérisé en ce qu'**on réalise un couplage avec l'analyse d'échelle.

11. Méthode selon la revendication 9 ou 10, **caractérisé en ce que** la détermination du changement de position se fait sur différentes échelles de longueur à l'aide des caractéristiques locales.

12. Méthode selon la revendication 11, **caractérisé en ce que** le choix des caractéristiques locales se fait en fonction de l'échelle de longueur.

13. Méthode selon l'une quelconque des revendications précédentes, **caractérisé en ce qu'**on compare les résultats de l'analyse réalisée à l'aide des caractéristiques globales avec les résultats de l'analyse réalisée à l'aide des caractéristiques locales.

14. Méthode selon l'une quelconque des revendications précédentes, **caractérisé en ce qu'**on utilise seulement les caractéristiques locales ne venant pas contredire l'analyse réalisée à l'aide des caractéristiques globales.

Fig.1

Fig.2a  Fig.2b  Fig.2c

Fig.3d

Fig.3c

Fig.3b

Fig.3a

Fig.4

Fig.5

Fig.6a

Fig.6b

Fig.6c

Fig.6d

Fig.7